# EUROPÄISCHE PATENTANMELDUNG

(11) **EP 4 471 894 A1**
(43) Veröffentlichungstag der Anmeldung: **04.12.2024**
(21) Anmeldenummer: 23176204.8
(22) Anmeldetag: 30.05.2023
(51) Int. Cl.: H01M 4/36, B05D 1/40, H01M 4/38, H01M 4/583

(54) **VERFAHREN ZUM BESCHICHTEN EINES ELEKTRISCH LEITFÄHIGEN SUBSTRATS UND VERFAHREN ZUM HERSTELLEN VON ELEKTRODEN**

(71) Anmelder: Kwade, Arno, 38176 Wendeburg (DE)
(72) Erfinder: Kwade, Arno, 38176 Wendeburg (DE)
(74) Vertreter: Gramm, Lins & Partner Patent- und Rechtsanwälte PartGmbB

(57) **Zusammenfassung**

Offenbart ist ein Verfahren zum Beschichten eines elektrisch leitfähigen Substrats durch mindestens ein pulverförmiges oder granulatförmiges Gemisch, wobei das leitfähige Substrat durch mindestens zwei Walzen, insbesondere Kalanderwalzen, geführt wird, wobei unmittelbar auf mindestens eine der mindestens zwei Walzen das pulverförmige oder granulatförmige Gemisch aufgebracht und eine Schichtflächenmasse und/oder eine Schichtform des Gemischs auf der Walze eingestellt wird, und wobei das auf die mindestens eine der mindestens zwei Walzen aufgebrachte Gemisch von mindestens einer der mindestens zwei Walzen auf mindestens eine Seite des leitfähigen Substrats appliziert wird. Des Weiteren ist ein Verfahren zum Herstellen einer Elektrode offenbart.

## Beschreibung

Die Erfindung betrifft ein Verfahren zum Beschichten eines elektrisch leitfähigen Substrats durch mindestens ein pulver- oder granulatförmiges Gemisch, bei dem das leitfähige Substrat durch mindestens zwei Walzen, insbesondere Kalanderwalzen, geführt wird. Des Weiteren betrifft die Erfindung ein Verfahren zum Herstellen von Elektroden, insbesondere Batterieelektroden.

Es sind bereits Verfahren bekannt, die auf einer suspensionsbasierten Herstellung von Batterieelektroden basieren. Dabei erfolgt in einem ersten Schritt eine Nassbeschichtung einer Metallfolie mit einer anschließenden Trocknung der Beschichtung, um die Batterieelektrode fertigzustellen. Die Trockner für die Trocknung von nassbeschichteter Metallfolien haben üblicherweise eine Länge von mehreren 10 Metern, um Trocknungszeiten in der Größenordnung von 1 Minute und Durchsatzgeschwindigkeiten von bis zu 80 m/min zu ermöglichen. In der Regel werden die Batterieelektroden dabei einseitig, ggf. in Tandemfahrweise, beschichtet. Eine beidseitige Beschichtung von Batterieelektroden ist komplex und kostenintensiv.

Des Weiteren sind Verfahren zur Trockenbeschichtung von Batterieelektroden bekannt, die jedoch eine Vielzahl von Kalanderwalzen erfordern, um ein vordefiniertes Flächenmassengewicht der Beschichtung zu erzielen. Generell ist hier eine Entkopplung der Einstellung einer Dichte der Beschichtung von einem einzustellenden Flächenmassengewicht nur unzureichend möglich, da Kalanderwalzen üblicherweise zum Einstellen des Flächenmassengewichts die Beschichtung zusätzlich verdichten. Zudem sind diese Verfahren nicht in der Lage, zwei- oder mehrschichtige Elektroden, wie es bei der Nassbeschichtung möglich ist, zu erzeugen.

Die bereits bekannten Verfahren zum Herstellen von Batterieelektroden mittels einer Trockenbeschichtung oder Nassbeschichtung erfordern darüber hinaus viel Energie und/oder komplexe Herstellungsanlagen.

Die vorliegende Erfindung hat daher die Aufgabe, ein Verfahren zur Pulverbeschichtung eines leitfähigen Substrats, insbesondere zur Elektrodenherstellung, zu schaffen, welches technisch einfach umsetzbar ist und eine präzise Einstellung der Schichtflächenmasse und Elektrodendichte ermöglicht. Diese Aufgabe wird durch die im Anspruch 1 und im Anspruch 17 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Beschichten eines elektrisch leitfähigen Substrats durch mindestens ein pulver- oder granulatförmiges Gemisch bereitgestellt.

Das pulver- oder granulatförmige Gemisch kann vorzugsweise aus einem Aktivmaterial und einem Binder bestehen, welche ebenfalls in einer Pulverform vorliegen. Zur besseren Lesbarkeit ist im Folgenden lediglich das Gemisch beschrieben, welches jedoch in einer Pulverform oder Granulatform vorliegt. Das Gemisch kann dabei initial in einem feuchten oder trockenen Zustand vorliegen. Insbesondere können granulierte Gemische bzw. Pulvermischungen geringe Mengen an Flüssigkeiten (beispielsweise < 50 Vol. %, Lösemittel und/oder Elektrolytflüssigkeit) enthalten, um die Plastizität des Gemischs zu erhöhen oder alternative Binder einsetzen zu können.

Dabei kann das Gemisch als eine im Vorfeld intensiv gemischte und gegebenenfalls granulierte oder anderweitig beanspruchte Pulvermischung aus Aktivmaterialien, Leitfähigkeitsadditiven und Bindern ausgestaltet sein.

Des Weiteren wird bei dem Verfahren ein leitfähiges Substrat durch mindestens zwei Walzen, wie beispielsweise Kalanderwalzen, geführt.

Das leitfähige d.h. elektrisch leitfähige Substrat kann ein Metall, wie beispielsweise Kupfer oder Aluminium, eine Metalllegierung, ein Isolator mit einer elektrisch leitfähigen Beschichtung, ein elektrisch leitfähiger Kunststoff und dergleichen sein. Beispielsweise kann das leitfähige Substrat als eine Folie in Form einer Rolle vorliegen und kontinuierlich beschichtet werden.

Weiterhin kann das leitfähige Substrat als ein elektrischer Stromsammler fungieren, welcher in einem elektrochemischen Speicher in mindestens einer Elektrode verwendbar ist

In einem Schritt des Verfahrens wird unmittelbar auf mindestens eine der mindestens zwei Walzen das Gemisch aufgebracht und eine Schichtflächenmasse d.h. Masse des Gemischs pro Fläche und/oder eine Schichtform des Gemischs auf der Walze eingestellt. Die Schichten werden in einer Dicke bzw. Schichtdicken aufgebracht, so dass finale Schichtdicken von 50 bis 300 µm, vorzugsweise 150 bis 200 µm, entstehen können. Dies kann bei Kathoden und Graphitanoden gleichermaßen umgesetzt werden.

Die finale Schichtdicke kann als eine Schichtdicke in auf das leitfähige Substrat aufgebrachter Form definiert sein. Insbesondere kann eine eingestellte finale Schicht mit einer finalen Schichtdichte im Wesentlichen unverändert hinsichtlich der Schichtdicke auf das leitfähige Substrat übertragen werden.

Anschließend wird das auf die mindestens eine der mindestens zwei Walzen aufgebrachte Gemisch von mindestens einer der mindestens zwei Walzen auf mindestens eine Seite des leitfähigen Substrats appliziert.

Gemäß einem weiteren Aspekt der Erfindung wird ein Verfahren zum Herstellen einer Elektrode bereitgestellt. In einem Schritt wird ein als ein Stromsammler ausgestaltetes leitfähiges Substrat bereitgestellt und zwischen zwei Walzen geführt. Dabei wird der zwischen den Walzen geführte Stromsammler einseitig oder beidseitig mit mindestens einem als ein Silizium-Kohlenstoff Materialkomposit ausgestalteten Gemisch durch das erfindungsgemäße Verfahren zum Beschichten eines elektrisch leitfähigen Substrats beschichtet und in mindestens einem Schritt konfektioniert. Bei derartigen Anoden mit hohem Siliziumanteil können die aufgebrachten Schichtdicken in einem Bereich von 30 bis 120 µm, vorzugsweise 40 bis 80 µm, liegen.

Durch das Verfahren zum Beschichten eines elektrisch leitfähigen Substrats können Umfangsabschnitte der Walzen zum Applizieren oder Emittieren des Gemischs fungieren und weitere Umfangsabschnitte der Walzen zum Aufbringen des Gemischs auf das leitfähige Substrat eingesetzt werden. Hierdurch werden das Einstellen der Schichtflächenmasse und das Aufbringen des Gemischs als eine zumindest einseitige Beschichtung des leitfähigen Substrats voneinander entkoppelt, wodurch die jeweiligen Parameter technisch einfach und unabhängig voneinander einstellbar sind.

Das Verfahren kann mit einer minimalen Anzahl an Walzen realisiert werden und ist somit besonders energie- und kosteneffizient umsetzbar. Insbesondere kann das Verfahren bereits basierend auf einem Zwei-Walzen-Kalander realisiert werden. Dabei kann die Flächenmassenbelegung und Elektrodendichte besonders präzise eingestellt werden, da die Dosierung des Gemischs und die Schichtbildung aus dem Gemisch örtlich getrennt erfolgen.

Bei einem Ausführungsbeispiel wird das Gemisch durch mindestens eine Streu- oder Dosiereinrichtung, beispielsweise eine Streuwalze, unmittelbar auf die mindestens eine Walze aufgebracht. Beim Aufbringen des Gemischs auf die Walze wird vorzugsweise die Schichtflächenmasse, insbesondere in Form einer Flächenbeladung bzw. Masse pro Fläche, des Gemischs mittels einer Mengendosierung des Gemischs eingestellt. Hierdurch kann die Schichtflächenmasse der Beschichtung gezielt eingestellt werden.

Die Streu- oder Dosiereinrichtung kann technisch besonders einfach ausgestaltet sein, wenn diese als ein Trichter oder als ein Schacht mit oder ohne ein integriertes Rührwerk, Vibrationseinrichtung oder Belüftungseinrichtung ausgestaltet ist. Bevorzugterweise wird das Gemisch aus dem Trichter oder aus dem Schacht von der mindestens einer der mindestens zwei Walzen abgezogen. Durch diese Maßnahme kann das Gemisch unter Berücksichtigung einer vorgegebenen Schichtflächenmasse passiv aus der Streu- oder Dosiereinrichtung entnommen und dosiert werden.

Nach einer weiteren Ausführungsform wird das Gemisch durch mindestens eine als bewegbare Siebfläche oder als eine stehende Siebfläche mit bewegbarem Werkzeug, wie beispielsweise ein Sieb mit einer Bürste, ausgestaltete Streu- oder Dosiereinrichtung auf die mindestens eine Walze aufgebracht. Beim Aufbringen des Gemischs auf die Walze wird die Schichtflächenmasse des Gemischs mittels einer Mengendosierung des Gemischs eingestellt. Hierdurch kann eine aktive Mengendosierung des Gemischs zur besonders präzisen Einstellung der Schichtflächenmasse verwendet werden. Insbesondere kann eine derartige Streu- oder Dosiereinrichtung in zeitlichen Intervallen betrieben werden, um beispielsweise unterschiedliche Bereiche des leitfähigen Substrats zu beschichten. Darüber hinaus kann durch eine derartige Streu- oder Dosiereinrichtung die Schichtflächenmasse variiert oder dynamisch an vorgegebene Parameter angepasst werden.

Die Schichtdicke des pulverförmigen Gemischs auf dem leitfähigen Substrat kann technisch einfach und präzise eingestellt werden, wenn eine finale Schichtdicke oder eine vorläufige Schichtdicke des auf die mindestens eine Walze aufgebrachten Gemischs durch mindestens einen Rakel und/oder durch mindestens eine Rakelwalze homogenisiert und vorverdichtet wird. Die Rakelwalze kann hierbei gleich- oder gegensinnig zur korrespondierenden Walze mit dem aufgebrachten Gemisch angetrieben werden.

Nach einer weiteren Ausführungsform sind die Streu- oder Dosiereinrichtung in Form eines Trichters oder eines Schachts mit einer Rakelwalze zu einer Einheit verbunden. Vorteilhafterweise werden durch die Einheit eine Schichtflächenmasse eingestellt, eine resultierende Schicht homogenisiert und vorverdichtet. Diese Maßnahme ermöglicht eine besonders kompakte Ausgestaltung der Herstellungsvorrichtung.

Die Einheit kann einen Trichter oder Schacht, mit oder ohne ein integriertes Rührwerk und/oder einer Vibrationseinrichtung und/oder einer Belüftungseinrichtung aufweisen.

Gemäß einem weiteren Ausführungsbeispiel wird die finale Schichtdicke des auf die mindestens eine Walze aufgebrachten Gemischs durch mindestens eine zu der Walze benachbart angeordnete Anpresswalze eingestellt. Durch diese Maßnahme kann beispielsweise eine dritte Walze zum gezielten Anpressen des Gemischs auf das leitfähige Substrat oder auf die mindestens eine Walze herangezogen werden.

Mindestens eine Komponente des Gemischs kann aktiviert werden, wenn das auf die mindestens eine Walze aufgebrachte Gemisch erhitzt wird. Je nach Ausgestaltung kann das Gemisch indirekt durch ein Erwärmen der Walze oder direkt durch ein Beaufschlagen des aufgebrachten Gemischs mit mindestens einer Strahlung erwärmt werden.

Das auf die mindestens eine Walze aufgebrachte Gemisch kann besonders vielseitig erwärmt werden, wenn dieses durch eine langwellige Strahlung, wie beispielsweise Infrarotstrahlung oder Wärmestrahlung oder Mikrowellenstrahlung, und/oder eine kurzwellige Strahlung, wie beispielsweise Röntgenstrahlung, und/oder über ein erwärmtes Umgebungsgas erwärmt wird. Durch diese Maßnahme kann eine Vielzahl von möglichen Wärmequellen zum Erwärmen des aufgetragenen Gemischs eingesetzt werden. Insbesondere kann die Wahl einer Strahlenquelle oder Wärmequelle an die Bestandteile des Gemischs und an die Herstellungsvorrichtung zum Durchführen des erfindungsgemäßen Verfahrens angepasst werden.

Nach einer weiteren Ausführungsform wird jeweils mindestens ein Gemisch auf beide von zwei Walzen aufgebracht und in seiner Schichtflächenmasse eingestellt. Dabei wird ein erstes Gemisch auf eine erste Walze und ein zweites Gemisch auf eine zweite Walze aufgebracht. Das erste Gemisch wird anschließend auf eine erste Seite des leitfähigen Substrats und das zweite Gemisch auf eine zweite Seite des leitfähigen Substrats im Spalt zwischen zwei Walzen appliziert. Hierdurch wird die Herstellung einer doppelseitig beschichteten Elektrode mit dem leitfähigen Substrat als Mittelschicht ermöglicht. In einer einfachsten Ausgestaltung kann dies bereits mit einer als Zwei-Walzen-Kalander oder Vier-Walzen-Kalander ausgestalteten Herstellungsvorrichtung realisiert werden. Die jeweiligen Walzen können nebeneinander angeordnet horizontal ausgerichtet sein.

Das erfindungsgemäße Verfahren ermöglicht eine technisch einfache Herstellungsvorrichtung bei gleichzeitiger Entkopplung der Einstellung des Flächenmassengewichtes und der Elektrodendichte der einseitigen oder beidseitigen Beschichtung durch Gemisch. Durch das kompakte Verfahren kann eine beidseitig doppelschichtig beschichtete Elektrode durch Aufbringen einer weiteren Schicht in einem in gleicher Art ausgeführten, direkt nachgeschalteten Prozessschritt kostengünstig aufgebracht werden.

Gemäß einem weiteren Ausführungsbeispiel sind eine dritte Walze und eine vierte Walze vorgesehen, welche als äußere Walzen ausgestaltet sind. Die dritte Walze ist zu der ersten Walze benachbart und die vierte Walze ist zu der zweiten Walze benachbart angeordnet. Ein erstes Gemisch wird auf die dritte Walze und ein zweites Gemisch wird auf die vierte Walze aufgebracht und in der jeweils entsprechenden Flächenbeladung eingestellt. Dabei kann die Flächenbeladung des ersten pulverförmigen Gemischs zur Ausbildung einer ersten Beschichtung unabhängig von der Flächenbeladung des zweiten Gemischs zur Ausbildung einer zweiten Beschichtung oder weiteren Beschichtungen eingestellt werden. Hierdurch können Elektroden mit einer Vielzahl von Beschichtungen hergestellt werden.

Das erste Gemisch wird über die erste Walze auf eine erste Seite des leitfähigen Substrats und das zweite Gemisch über die zweite Walze auf eine zweite Seite des leitfähigen Substrats im Spalt zwischen den beiden als innere Walzen ausgestalteten ersten Walze und zweiten Walze appliziert. Durch diese Maßnahme kann eine technisch einfache beidseitige Pulverbeschichtung des leitfähigen Substrats erzielt werden, die eine besonders präzise Steuerung der Flächenbeladung zulässt.

Das Verfahren kann dazu eingesetzt werden, mehrere Elektroden parallel herzustellen oder eine gezielte Konturierung der Beschichtung zu erzeugen, wenn Ränder der verdichteten Schichten der beiden Seiten des leitfähigen Substrats auf den inneren beiden Walzen beschnitten werden, um die Schichtform des Gemischs einzustellen. Beispielsweise kann das leitfähige Substrat durch mehrere voneinander beabstandete und parallele Flächen aus Gemisch beschichtet werden. In einem nachfolgenden Schritt kann das beschichtete Substrat zwischen den beschichteten Flächen aufgetrennt bzw. separiert werden, wodurch mehrere "Elektrodenbahnen" herstellbar sind. Alternativ kann eine präzise Formung der Ränder und Kanten der Beschichtung durch den Schritt der Konturierung erzielt werden.

Nach einer weiteren Ausführungsform gleicht eine Materialzusammensetzung des ersten Gemischs einer Materialzusammensetzung des zweiten Gemischs oder unterscheidet sich von der Materialzusammensetzung des zweiten Gemischs. Durch diese Maßnahme kann die Beschichtung der ersten Seite und der zweiten Seite des leitfähigen Substrats mit einem identischen Gemisch oder mit unterschiedlichen Gemischen erfolgen. Eine derartige Beschichtung bietet zusätzliche Einstellungsmöglichkeiten für die Eigenschaften der resultierenden Elektroden durch die Wahl der jeweiligen Beschichtungen.

Gemäß einem weiteren Ausführungsbeispiel wird mindestens ein als eine Metallfolie oder als ein Metallgitter oder als ein elektrisch leitfähiger Kunststoff ausgestaltetes leitfähiges Substrat zwischen den mindestens zwei Walzen geführt. Hierdurch kann eine Vielzahl von unterschiedlichen Substraten in Form einer Bahn oder Folie für das Aufbringen der Pulverbeschichtung verwendet werden. Die Substrate können dabei mit einer Primerschicht zur Haftkraftverbesserung ausgestaltet sein.

Die Pulverbeschichtung durch das mindestens eine Gemisch kann besonders effizient und zuverlässig erfolgen, wenn als mindestens ein Gemisch zumindest ein Aktivmaterial, insbesondere ein Silizium-Kohlenstoff Materialkomposit, mit mindestens einem Binder auf die mindestens eine Walze aufgebracht wird.

Nach einer weiteren Ausführungsform ist die mindestens eine Walze in mehrere Umfangsabschnitte unterteilt.

In einem ersten Umfangsabschnitt wird das Gemisch auf die Walze aufgebracht.

In einem zweiten Umfangsabschnitt wird das aufgebrachte Gemisch vorverdichtet und eine gleichmäßige Schichtdicke eingestellt oder begrenzt. Zudem kann über Wärme- oder auch Lichteinwirkung der Binder aktiviert werden.

In einem dritten Umfangsabschnitt wird das Gemisch vom dritten Umfangsabschnitt gelöst und auf mindestens eine Seite des leitfähigen Substrats übertragen oder zu einer freistehenden Elektrodenschicht verpresst. Durch eine derartige Ausnutzung von verschiedenen Umfangsabschnitten für die jeweiligen Verfahrensschritte kann eine Trennung der jeweiligen einzustellenden Parameter, wie beispielsweise der Flächenbeladung, realisiert werden, sodass diese unabhängig voneinander bzw. isoliert einstellbar sind.

Durch die Dosierung und primäre Schichtbildung, welche unabhängig vom eigentlichen Walzenspalt ist, können in einer weiteren vorteilhaften Ausführungsform, auch zwei- oder mehrschichtige Elektroden hergestellt werden. Hierzu ist auf einer fünften Walze und/oder mindestens einer sechsten Walze (nach Durchgang der ersten Schicht über zwei Walzen bzw. durch zwei Walzenspalte) auf die gebildete und zumindest leicht verdichtete erste Schicht eine zweite Schicht analog zur ersten Schicht aufbringbar. In Abhängigkeit von dem Übertragungsort des Gemischs auf den Stromsammler (in einem dritten Walzenspalt oder in einem vierten Walzenspalt) kann die, beispielsweise zweilagige, Gesamtschicht mit direktem Kontakt der ersten oder der zweiten Teilschicht auf den Stromsammler appliziert werden. Hierdurch kann neben einem Gradienten in der Materialzusammensetzung bei Bedarf auch ein Gradient in der Porosität eingestellt werden. Das bereichsweise Bedecken der ersten Schicht bzw. des ersten applizierten Gemischs mit dem zweiten Gemisch kann bereichsweise erfolgen, sodass Teilschichten oder Teilbereiche der ersten Beschichtung auf dem Substrat durch das zweite Gemisch bedeckt werden.

Bei einer alternativen Ausführungsform sind zumindest eine fünfte Walze und/oder zumindest eine sechste Walze vorgesehen. Die fünfte Walze und/oder die sechste Walze sind dazu eingerichtet, auf ein auf mindestens einer davor liegenden Walze, beispielsweise erste Walze aufgebrachtes Gemisch mindestens ein weiteres Gemisch aufzubringen. Die davor liegende Walze ist als eine im Auftragsweg des Gemischs vor der fünften Walze angeordnete Walze zu verstehen. Insbesondere wird ein erstes Gemisch von der davor liegenden Walze in roher oder bearbeiteter Form auf die mindestens eine fünfte und/oder sechste Walze übertragen. Durch das Aufbringen des mindestens einen weiteren Gemischs wird das zuvor aufgebrachte Gemisch auf der fünften und/oder sechsten Walze vollständig oder bereichsweise bedeckt. Somit kann die fünfte und/oder sechste Walze mit zwei Schichten von gleichen oder unterschiedlichen Gemischen versehen werden, bevor diese auf das leitfähige Substrat appliziert werden.

Nachstehend werden mehrere Ausführungsbeispiele der Erfindung anhand der Zeichnungen näher erläutert. Es zeigen:
Fig. 1 einen Querschnitt einer Herstellungsvorrichtung zum Veranschaulichen eines erfindungsgemäßen Verfahrens zum Beschichten eines elektrisch leitfähigen Substrats gemäß einer ersten Ausführungsform,
Fig. 2 einen Querschnitt einer Herstellungsvorrichtung zum Veranschaulichen eines erfindungsgemäßen Verfahrens zum Beschichten eines elektrisch leitfähigen Substrats gemäß einer zweiten Ausführungsform,
Fig. 3 einen Querschnitt einer Herstellungsvorrichtung zum Veranschaulichen eines erfindungsgemäßen Verfahrens zum Beschichten eines elektrisch leitfähigen Substrats gemäß einer dritten Ausführungsform,
Fig. 4 einen Querschnitt einer Herstellungsvorrichtung zum Veranschaulichen eines erfindungsgemäßen Verfahrens zum Beschichten eines elektrisch leitfähigen Substrats gemäß einer vierten Ausführungsform,
Fig. 5 einen Querschnitt einer Herstellungsvorrichtung zum Veranschaulichen eines erfindungsgemäßen Verfahrens zum Beschichten eines elektrisch leitfähigen Substrats gemäß einer fünften Ausführungsform,
Fig. 6 einen Querschnitt einer Herstellungsvorrichtung zum Veranschaulichen eines erfindungsgemäßen Verfahrens zum Beschichten eines elektrisch leitfähigen Substrats gemäß einer sechsten Ausführungsform, und
Fig. 7 einen Querschnitt einer Herstellungsvorrichtung zum Veranschaulichen eines erfindungsgemäßen Verfahrens zum Beschichten eines elektrisch leitfähigen Substrats gemäß einer siebten Ausführungsform.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

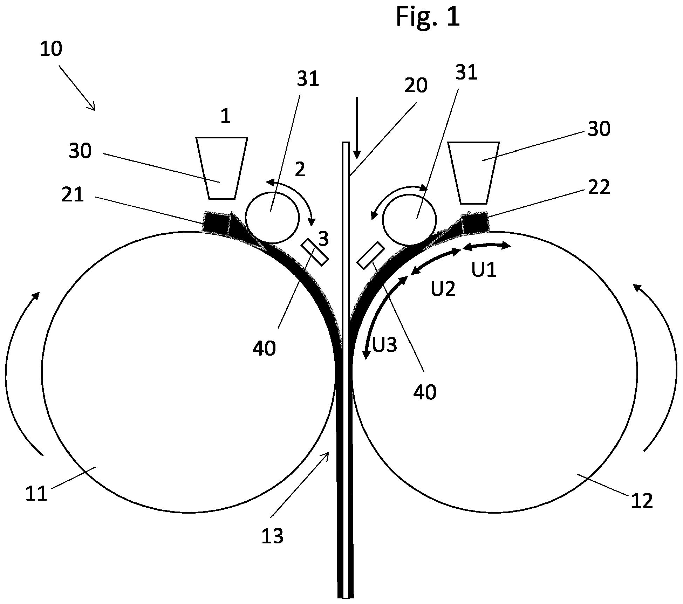

Die Fig. 1 zeigt einen Querschnitt einer Herstellungsvorrichtung 10 zum Veranschaulichen eines erfindungsgemäßen Verfahrens zum Beschichten eines elektrisch leitfähigen Substrats 20 gemäß einer ersten Ausführungsform. Die Herstellungsvorrichtung 10 ist im dargestellten Ausführungsbeispiel als ein Zwei-Walzen-Kalander ausgestaltet. Eine derartige zwei-Walzenanordnung ermöglicht eine kompakte Herstellungsvorrichtung 10 zum Pulverbeschichten des leitfähigen Substrats 20.

Die erfindungsgemäße Herstellungsvorrichtung 10 weist eine erste Walze 11 und eine zweite Walze 12 auf, welche parallel zueinander angeordnet und durch einen Spalt 13 voneinander beabstandet sind. Durch den Spalt 13 zwischen den Walzen 11, 12 kann das leitfähige Substrat 20 geführt werden. Das leitfähige d.h. elektrisch leitfähige Substrat 20 kann ein Metall, wie beispielsweise Kupfer oder Aluminium, eine Metalllegierung, eine Isolator mit einer elektrisch leitfähigen Beschichtung, ein elektrisch leitfähiger Kunststoff und dergleichen sein. Beispielsweise kann das leitfähige Substrat 20 als eine Folie in Form einer Rolle vorliegen und kontinuierlich Beschichtet werden.

Darüber hinaus ist für eine beidseitige Beschichtung des leitfähigen Substrats 20 an jeder Walze 11, 12 eine Streu- oder Dosiereinrichtung 30 angeordnet. Im dargestellten Ausführungsbeispiel ist die Streu- oder Dosiereinrichtung 30 in Form eines Trichters oder Schachts ausgestaltet. Die Streu- oder Dosiereinrichtung 30 kann ein pulverförmiges oder granulatförmiges Gemisch 21, 22, welches als eine Beschichtung auf eine erste Seite 23 und/oder auf eine zweite Seite 24 des leitfähigen Substrats 20 aufgebracht wird auf einen ersten Umfangsabschnitt U1 der jeweiligen Walzen 11, 12 applizieren. Alternativ können die Walzen 11, 12 an diesem ersten Umfangsabschnitt U1 das pulverförmige Gemisch 21, 22 aus der Streu- oder Dosiereinrichtung 30 abziehen bzw. mitnehmen.

Das Gemisch 21, 22 besteht beispielsweise aus einem Aktivmaterial und einem Binder, welche ebenfalls in einer Pulverform vorliegen. Das Gemisch 21,22 kann aber auch aus feuchten Granulaten bestehen, die eine vergleichsweise geringe Menge Lösungsmittel oder Elektrolyt enthalten. Dabei kann das Gemisch 21, 22 als eine im Vorfeld intensiv gemischte Pulvermischung aus Aktivmaterialien, Leitfähigkeitsadditiven und Bindern ausgestaltet und mitunter granuliert sein. Im dargestellten Ausführungsbeispiel wird ein erstes pulverförmiges oder granulatförmiges Gemisch 21 auf die erste Walze 11 und ein zweites pulverförmiges oder granulatförmiges Gemisch 22 auf die zweite Walze 12 aufgebracht. Dies erfolgt in einem ersten Schritt 1 des Verfahrens.

Die Förderrichtung des leitfähigen Substrats 20 bei einem Führen durch die mindestens zwei Walzen 11, 12 und die Drehrichtungen der jeweiligen Walzen 11, 12 sind mit Hilfe von Pfeilen schematisch veranschaulicht.

In einem Schritt 1 des Verfahrens wird unmittelbar auf mindestens eine der mindestens zwei Walzen 11, 12 das Gemisch 21, 22 aufgebracht und eine Schichtflächenmasse d.h. Masse des Gemischs 21, 22 pro Fläche und/oder eine Schichtform des Gemischs 21, 22 auf der Walze 11, 12 eingestellt.

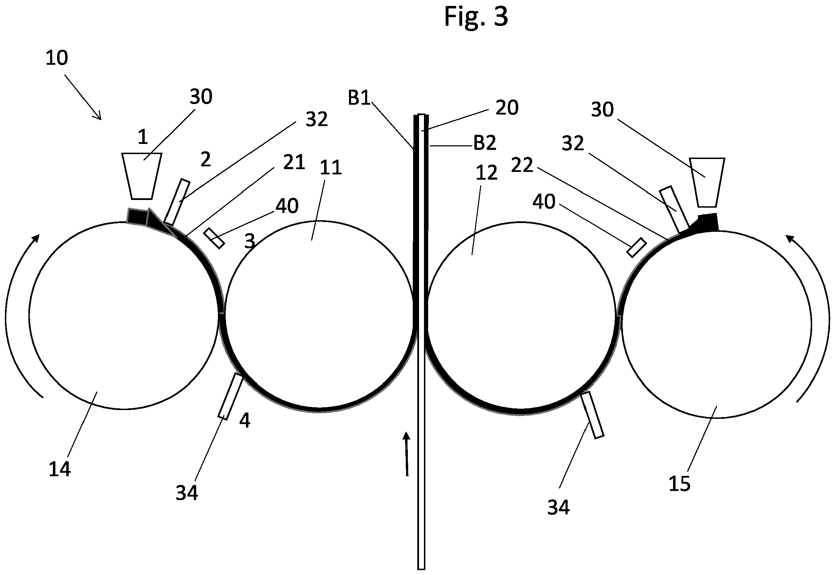

In einem weiteren Schritt 2 des Verfahrens wird die Schichtdicke des Gemischs 21, 22 eingestellt. Dabei wird eine finale Schichtdicke oder eine vorläufige Schichtdicke des auf die mindestens eine Walze 11, 12 aufgebrachten Gemischs 21, 22 durch mindestens einen Rakel 32 (siehe Fig. 3) und/oder durch mindestens eine Rakelwalze 31 homogenisiert und vorverdichtet. Dieser Schritt 2 wird in einem zweiten Umfangsabschnitt U2 der Walzen 11, 12 mittels der Rakelwalze 31 ausgeführt.

Das durch die Rakelwalze 31 abgestreifte Gemisch 21, 22 kann anschließend den beiden Streu- oder Dosiereinrichtungen 30 erneut zugeführt werden. Die Rakelwalze 31 kann hierbei gleich- oder gegensinnig zur korrespondierenden Walze 11, 12 mit dem aufgebrachten Gemisch 21, 22 angetrieben werden.

In einem weiteren Schritt 3 des Verfahrens wird das auf die Walzen 11, 12 aufgebrachte Gemisch 21, 22 mit einer Strahlung erwärmt. Im dargestellten Ausführungsbeispiel werden Strahlenquellen 40 in Form von Infrarotemittern zum Erzeugen von Infrarotstrahlung, insbesondere im NIR Bereich, eingesetzt. Das Beaufschlagen des Gemischs 21, 22 auf den Walzen 11, 12 erfolgt in einem dritten Umfangsabschnitt U3 der Walzen 11, 12.

Die jeweiligen Umfangsabschnitte U1, U2, U3 sind nicht ortsfest auf den Walzen 11, 12 angeordnet, sondern sind ortsfest zu der Herstellungsvorrichtung 10 zu verstehen. Die jeweiligen Umfangsabschnitte U1, U2, U3 drehen sich somit nicht mit den Walzen 11, 12. Die Walzen 11, 12 drehen sich unter den bzw. entlang den Umfangsabschnitten U1, U2, U3.

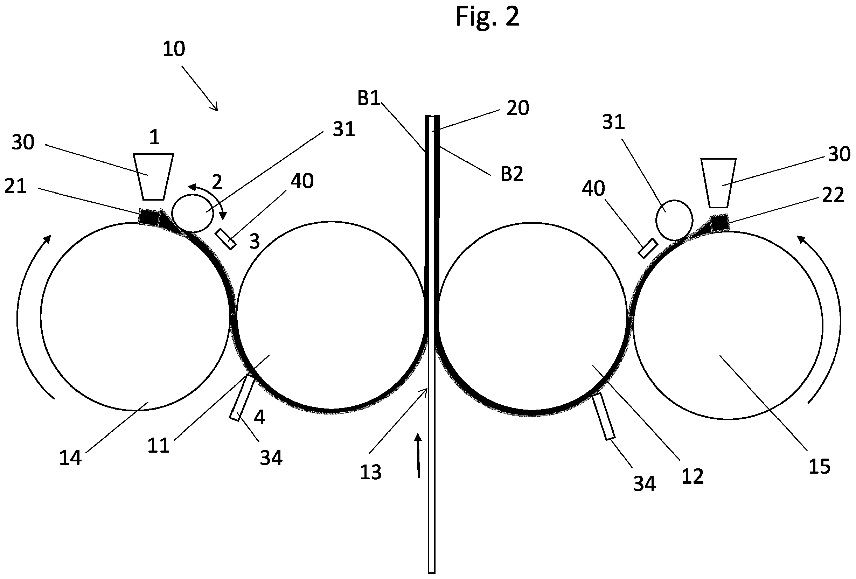

In der Fig. 2 ist ein Querschnitt einer Herstellungsvorrichtung 10 zum Veranschaulichen eines erfindungsgemäßen Verfahrens zum Beschichten eines elektrisch leitfähigen Substrats 20 gemäß einer zweiten Ausführungsform gezeigt. Im Unterschied zum ersten Ausführungsbeispiel ist die Herstellungsvorrichtung 10 als ein Vier-Walzen-Kalander ausgestaltet.

Die Herstellungsvorrichtung 10 weist somit eine dritte Walze 14 und eine vierte Walze 15 auf, welche als äußere Walzen 14, 15 ausgestaltet sind. Die dritte Walze 14 ist zu der ersten Walze 11 benachbart und die vierte Walze 15 ist zu der zweiten Walze 12 benachbart angeordnet.

Ein erstes Gemisch 21 wird auf die dritte Walze 14 und ein zweites Gemisch 22 wird auf die vierte Walze 15 in einem Schritt 1 des Verfahrens aufgebracht und in der jeweils entsprechenden Flächenbeladung durch die Rakelwalzen 31 eingestellt. Dabei kann die Flächenbeladung des ersten Gemischs 21 zur Ausbildung einer ersten Beschichtung B1 unabhängig von der Flächenbeladung des zweiten Gemischs 22 zur Ausbildung einer zweiten Beschichtung B2 eingestellt werden.

Die Erwärmung der auf die äußeren Walzen 14, 15 aufgebrachten Gemische 21, 22 erfolgt analog zur Fig. 1 durch Infrarotemitter 40 in einem Schritt 3 des Verfahrens nach dem Passieren der Rakelwalzen 31 in einem vorangehenden Verfahrensschritt 2.

Im dargestellten Ausführungsbeispiel werden vor einem Aufbringen der Gemische 21, 22 auf das leitfähige Substrat 20 in einem Verfahrensschritt 4 die verdichteten Gemische 21, 22 an den Rändern ihrer Schichten auf den inneren beiden Walzen 11, 12 beschnitten, um die Schichtform der Gemische 21, 22 einzustellen. Hierzu können zusätzliche Rakel 34 oder Abstreifer verwendet werden.

Die Fig. 3 zeigt einen Querschnitt einer Herstellungsvorrichtung 10 zum Veranschaulichen eines erfindungsgemäßen Verfahrens zum Beschichten eines elektrisch leitfähigen Substrats 20 gemäß einer dritten Ausführungsform. Im Unterschied zu den bereits beschriebenen Ausführungsbeispielen wird hier anstelle von Rakelwalzen 31 Rakel 32 zum Homogenisieren und Vorverdichten der Gemische 21, 22 verwendet.

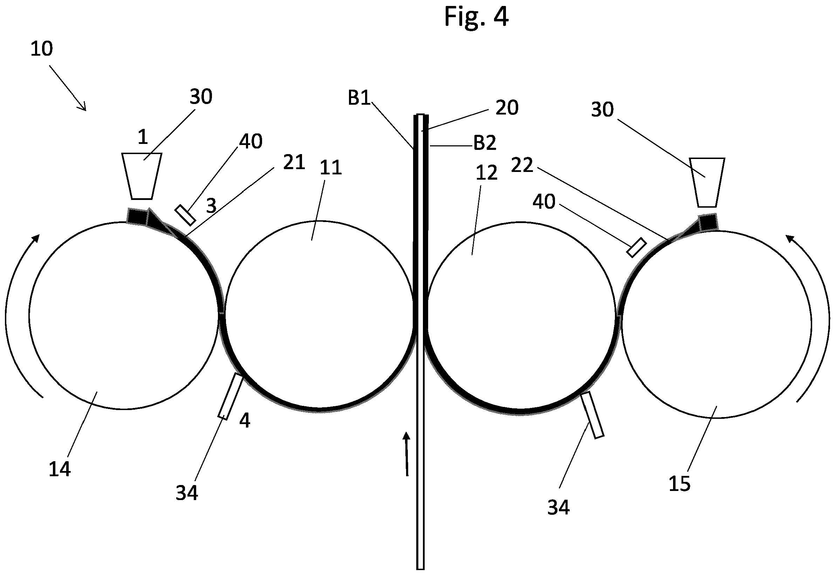

In der Fig. 4 ist ein Querschnitt einer Herstellungsvorrichtung 10 zum Veranschaulichen eines erfindungsgemäßen Verfahrens zum Beschichten eines elektrisch leitfähigen Substrats 20 gemäß einer vierten Ausführungsform illustriert. Im Unterschied zu den bereits beschriebenen Ausführungsformen entfällt hier der Schritt 2 des Verfahrens, sodass die Vorverdichtung der auf die äußeren Walzen 14, 15 aufgetragenen Gemische 21, 22 entfällt oder durch ein Zusammenwirken zwischen den inneren Walzen 11, 12 und den äußeren Walzen 14, 15 realisiert wird.

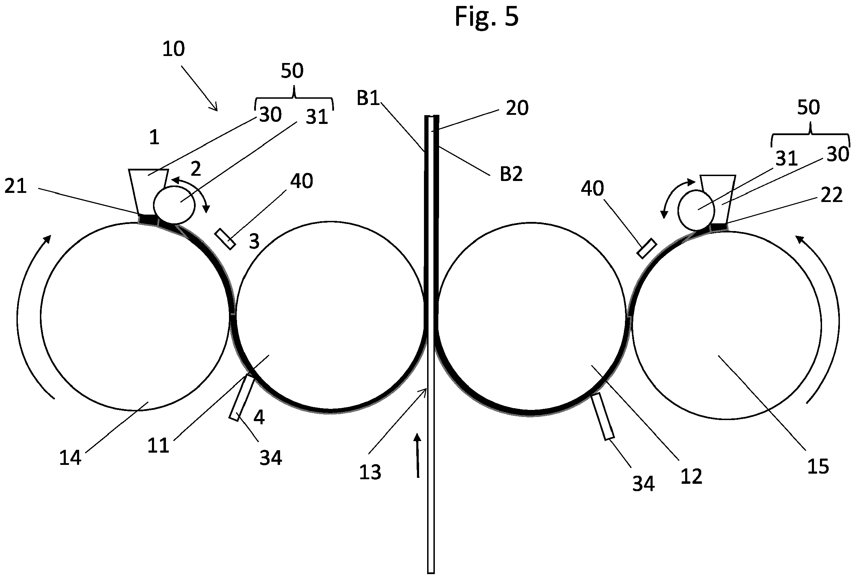

In der Fig. 5 ist ein weiterer Querschnitt einer Herstellungsvorrichtung 10 zum Veranschaulichen eines erfindungsgemäßen Verfahrens zum Beschichten eines elektrisch leitfähigen Substrats 20 gemäß einer fünften Ausführungsform gezeigt. Bei dieser Ausführungsform können die in Fig. 1 beschriebenen Schritte 1 und 2 (Trichter oder Schacht und Rakelwalze) kombiniert werden, sodass die über einen Trichter oder Schacht 30 auf die äußeren Walzen 14,15 aufgetragenen Schichten der Gemische 21,22 direkt beim Austritt aus dem Trichter- oder Schachtbereich 30 über Rakelwalzen 31 homogenisiert und vorverdichtet werden. Die Streu- oder Dosiereinrichtung 30 und die Rackelwalze 31 sind hierbei als eine Einheit 50 ausgestaltet, die ein im Wesentlichen gleichzeitiges Aufbringen, Homogenisieren und Vorverdichten des Gemischs 21, 22 ermöglicht. Hierdurch wird ein kompakterer Aufbau der Herstellungsvorrichtung 10 ermöglicht, der einen Gemischaustrag aus dem Trichter oder Schacht 30 unterstützt und der einen Anfall bzw. Überschuss von abgestreiftem Gemisch vermiedet.

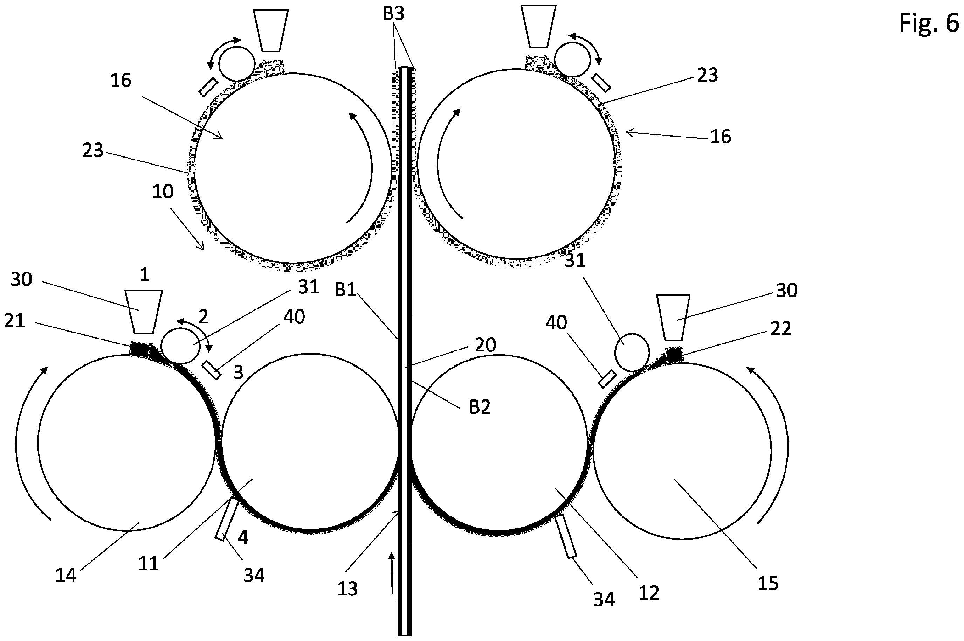

Die Fig. 6 zeigt einen weiteren Querschnitt einer Herstellungsvorrichtung 10 zum Veranschaulichen eines erfindungsgemäßen Verfahrens zum Beschichten eines elektrisch leitfähigen Substrats 20 gemäß einer sechsten Ausführungsform. Zusätzlich zu den bereits beschriebenen Ausführungsformen sind zwei fünfte Walze 16 nachgelagert angeordnet, durch welche auf beiden Seiten des leitfähigen Substrats 20 jeweils eine weitere Beschichtung B3 auf die zuvor aufgebrachten Beschichtungen B1, B2 appliziert wird. Diese Ausführungsform kann beispielsweise als eine Kombination der Herstellungsvorrichtungen 10 aus der Fig. 1 und der Fig. 2 realisiert werden. Dabei kann die Herstellungsvorrichtung 10 aus Fig. 1 quasi in Reihe mit der Herstellungsvorrichtung 10 aus Fig. 2 angeordnet werden.

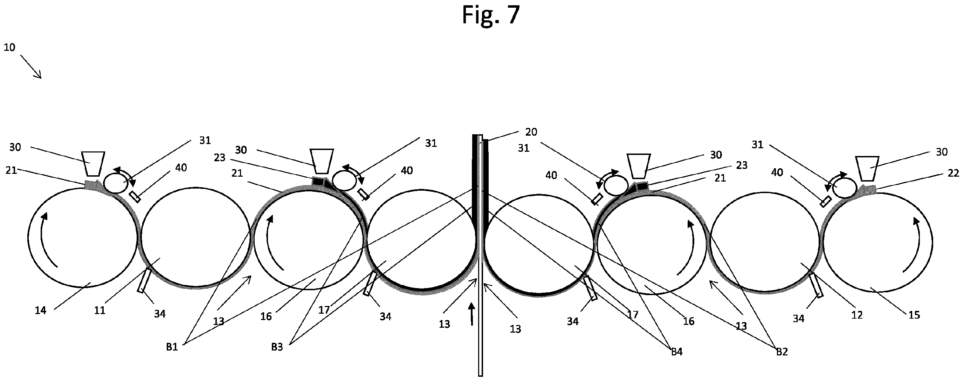

Weiterhin ist in der Fig. 7 ein Querschnitt einer Herstellungsvorrichtung 10 zum Veranschaulichen eines erfindungsgemäßen Verfahrens zum Beschichten eines elektrisch leitfähigen Substrats 20 gemäß einer siebten Ausführungsform gezeigt. Dabei ist analog zu der sechsten Ausführungsform eine alternative Herstellungsvorrichtung 10 veranschaulicht, mit welcher zwei Beschichtungen B1, B2, B3 beidseitig des leitfähigen Substrats 20 aufbringbar sind.

Im Unterschied zu den bereits beschriebenen Ausführungsbeispielen ist die Herstellungsvorrichtung 10 als ein Acht-Walzen-Kalander ausgestaltet, um eine beidseitige Beschichtung des leitfähigen Substrats 20 umzusetzen.

Die Herstellungsvorrichtung 10 weist neben einer dritten Walze 14 und einer vierten Walze 15 auf, welche als äußere Walzen 14, 15 ausgestaltet sind, beidseitig des elektrisch leitfähigen Substrats 20 eine fünfte Walze 16 und eine sechste Walze 17 auf. Dabei fungieren die fünfte Walze 16 und die sechste Walze 17 im Wesentlichen als eine weitere Anordnung der dritten Walze 14 und der ersten Walze 11 bzw. der vierten Walze 15 und der zweiten Walze 12. Die fünfte Walze 16 ist zu der sechsten Walze 17 benachbart angeordnet.

Ein erstes Gemisch 21 wird auf die dritte Walze 14 und ein zweites Gemisch 22 wird auf die vierte Walze 15 in einem Schritt des Verfahrens aufgebracht und in der jeweils entsprechenden Flächenbeladung durch die Rakelwalzen 31 eingestellt. Dabei kann die Flächenbeladung des ersten Gemischs 21 zur Ausbildung einer ersten Beschichtung B1 unabhängig von der Flächenbeladung des zweiten Gemischs 22 zur Ausbildung einer zweiten Beschichtung B2 eingestellt werden. Die hierdurch eingestellte erste Beschichtung B1 bzw. zweite Beschichtung B2 wird anschließend auf die fünfte Walze 16 übergeben.

Auf der fünften Walze 16 wird ein drittes Gemisch aufgebracht. Dabei wird auch eine spezifische Flächenbeladung durch die Rakelwalzen 31 der fünften Walze 16 eingestellt. Durch diese Maßnahme wird auf der ersten Beschichtung B1 eine dritte Beschichtung B3 aufgetragen. Analog hierzu wird auf der zweiten Beschichtung B2 eine vierte Beschichtung B4 appliziert. Somit erfolgt eine Vorbereitung einer beidseitigen Beschichtung des leitfähigen Substrats 20 mit jeweils zwei Beschichtungen B1, B2, B3, B4.

Analog zur zweiten Ausführungsform kann eine Erwärmung der jeweiligen Gemische 21, 22 durch Infrarotemitter 40 nach dem Passieren der jeweiligen Rakelwalzen 31 erfolgen.

Anschließend werden die vorbereiteten Beschichtungen B1, B2, B3, B4 durch die beidseitig des Substrats 20 angeordneten sechsten Walzen 17 auf das leitfähige Substrat 20 aufgetragen. Hierbei wird eine erste Seite des leitfähigen Substrats 20 mit einer ersten Beschichtung B1 und einer dritten Beschichtung und eine zweite Seite des leitfähigen Substrats mit einer zweiten Beschichtung B2 und einer vierten Beschichtung B4 versehen.

Je nach Ausgestaltung können die Beschichtungen B1, B2, B3, B4 vor dem Aufbringen auf das leitfähige Substrat 20 an den Rändern auf den inneren beiden sechsten Walzen 17 beschnitten werden, um die Schichtform einzustellen. Hierzu können zusätzliche Rakel 34 oder Abstreifer verwendet werden.

## Patentansprüche

1. Verfahren zum Beschichten eines elektrisch leitfähigen Substrats (20) durch mindestens ein pulver- oder granulatförmiges Gemisch (21, 22), wobei das leitfähige Substrat (20) durch mindestens zwei Walzen (11, 12), insbesondere Kalanderwalzen, geführt wird, wobei
- unmittelbar auf mindestens eine der mindestens zwei Walzen (11, 12) das Gemisch (21, 22) aufgebracht (1) und eine Schichtflächenmasse und/oder eine Schichtform des Gemischs (21, 22) auf der jeweiligen Walze (11, 12) eingestellt wird,
- das auf die mindestens eine der mindestens zwei Walzen (11, 12) aufgebrachte Gemisch (21, 22) von mindestens einer der mindestens zwei Walzen (11, 12) auf mindestens eine Seite des leitfähigen Substrats (20) appliziert wird.

2. Verfahren nach Anspruch 1, wobei das Gemisch (21, 22) durch mindestens eine Streu- oder Dosiereinrichtung (30), beispielsweise eine Streuwalze, unmittelbar auf die mindestens eine Walze (11, 12) aufgebracht wird, wobei beim Aufbringen des Gemischs (21, 22) auf die Walze (11, 12) die Schichtflächenmasse des Gemischs mittels einer Mengendosierung des Gemischs (21, 22) eingestellt wird.

3. Verfahren nach Anspruch 1 oder 2, wobei die Streu- oder Dosiereinrichtung (30) als ein Trichter oder als ein Schacht mit oder ohne ein integriertes Rührwerk, Vibrationseinrichtung oder Belüftungseinrichtung ausgestaltet ist, wobei das Gemisch (21, 22) aus dem Trichter oder aus dem Schacht von der mindestens einer der mindestens zwei Walzen (11, 12) abgezogen wird.

4. Verfahren nach Anspruch 1 oder 2, wobei das Gemisch (21, 22) durch mindestens eine als bewegbare Siebfläche oder als stehende Siebfläche mit bewegbarem Werkzeug, wie beispielsweise ein Sieb mit einer Bürste, ausgestaltete Streu- oder Dosiereinrichtung (30) auf die mindestens eine Walze (11, 12) aufgebracht wird, wobei beim Aufbringen des Gemischs (21, 22) auf die Walze (11, 12) die Schichtflächenmasse des Gemischs (21, 22) mittels einer Mengendosierung des Gemischs (21, 22) eingestellt wird.

5. Verfahren nach einem der Ansprüche 1 bis 4, wobei eine finale Schichtdicke oder eine vorläufige Schichtdicke des auf die mindestens eine Walze (11, 12) aufgebrachten Gemischs (21, 22) durch mindestens eine Rakelwalze (31) und/oder durch mindestens einen Rakel (32) homogenisiert und vorverdichtet wird.

6. Verfahren nach Anspruch 1, wobei die die Streu- oder Dosiereinrichtung (30) in Form eines Trichters oder eines Schachts mit einer Rakelwalze (31) zu einer Einheit (50) verbunden sind, wobei die Einheit (50) dazu eingerichtet ist, eine Schichtflächenmasse einzustellen und eine resultierende Schicht zu homogenisieren und vorzuverdichten.

7. Verfahren nach Anspruch 5 oder 6, wobei die finale Schichtdicke des auf die mindestens eine Walze (11, 12) aufgebrachten Gemischs (21, 22) durch mindestens eine zu der Walze (11, 12) benachbart angeordnete Anpresswalze (14, 15) eingestellt wird.

8. Verfahren nach einem der Ansprüche 1 bis 7, wobei das auf die mindestens eine Walze (11, 12) aufgebrachte Gemisch (21, 22) erhitzt wird, wobei das Gemisch (21, 22) indirekt durch ein Erwärmen der Walze oder direkt durch ein Beaufschlagen des aufgebrachten Gemischs (21, 22) mit mindestens einer Strahlung erwärmt wird.

9. Verfahren nach Anspruch 8, wobei das auf die mindestens eine Walze (11, 12) aufgebrachte Gemisch (21, 22) durch eine langwellige Strahlung, wie beispielsweise Infrarotstrahlung oder Wärmestrahlung oder Mikrowellenstrahlung, und/oder eine kurzwellige Strahlung, wie beispielsweise Röntgenstrahlung, und/oder über ein erwärmtes Umgebungsgas erwärmt wird.

10. Verfahren nach einem der Ansprüche 1 bis 9, wobei jeweils mindestens ein Gemisch (21, 22) auf beide von zwei Walzen (11, 12, 14, 15) aufgebracht und in seiner Schichtflächenmasse eingestellt wird, wobei ein erstes Gemisch (21) auf eine erste Walze (11) und ein zweites Gemisch (22) auf eine zweite Walze (12) aufgebracht wird, wobei das erste Gemisch (21) auf eine erste Seite des leitfähigen Substrats (20) und das zweite Gemisch (22) auf eine zweite Seite des leitfähigen Substrats (20) im Spalt (13) zwischen den beiden Walzen (11, 12) appliziert wird.

11. Verfahren nach Anspruch 10, wobei eine dritte Walze (14) und eine vierte Walze (15) vorgesehen sind, welche als äußere Walzen (14, 15) ausgestaltet sind, wobei die dritte Walze (14) zu der ersten Walze (11) benachbart und die vierte Walze (15) zu der zweiten Walze (12) benachbart angeordnet sind, wobei ein erstes Gemisch (21) auf die dritte Walze (14) und ein zweites Gemisch (22) auf die vierte Walze (15) aufgebracht und in seiner Flächenbeladung eingestellt wird, wobei das erste Gemisch (21) über die erste Walze (11) auf eine erste Seite des leitfähigen Substrats (20) und das zweite Gemisch (22) über die zweite Walze auf eine zweite Seite des leitfähigen Substrats (20) im Spalt (13) zwischen den beiden als innere Walzen (11, 12) ausgestalteten ersten Walze (11) und zweiten Walze (12) appliziert wird.

12. Verfahren nach Anspruch 11, wobei Ränder der verdichteten Schichten der beiden Seiten des leitfähigen Substrats (20) auf den inneren beiden Walzen (11, 12) beschnitten werden, um die Schichtform des Gemischs (20) einzustellen.

13. Verfahren nach einem der Ansprüche 10 bis 12, wobei eine Materialzusammensetzung des ersten Gemischs (21) einer Materialzusammensetzung des zweiten Gemischs (22) gleicht oder sich von der Materialzusammensetzung des zweiten Gemischs (22) unterscheidet.

14. Verfahren nach einem der Ansprüche 1 bis 13, wobei mindestens ein als eine Metallfolie oder als ein Metallgitter oder als ein elektrisch leitfähiger Kunststoff ausgestaltetes leitfähiges Substrat (20) zwischen den mindestens zwei Walzen (11, 12) geführt wird.

15. Verfahren nach einem der Ansprüche 1 bis 14, wobei als mindestens ein Gemisch (21, 22) zumindest ein Aktivmaterial, insbesondere ein Silizium-Kohlenstoff Materialkomposit, mit mindestens einem Binder auf die mindestens eine Walze (11, 12) aufgebracht wird.

16. Verfahren nach einem der Ansprüche 1 bis 15, wobei die mindestens eine Walze (11, 12) in mehrere Umfangsabschnitte (U1, U2, U3) unterteilt ist, wobei in einem ersten Umfangsabschnitt (U1) das Gemisch (21, 22) auf die Walze (11, 12) aufgebracht wird, wobei in einem zweiten Umfangsabschnitt (U2) das aufgebrachte Gemisch (21, 22) vorverdichtet und eine gleichmäßige Schichtdicke eingestellt oder begrenzt wird, und wobei in einem dritten Umfangsabschnitt (U3) das Gemisch (21, 22) vom dritten Umfangsabschnitt (U3) gelöst und auf mindestens eine Seite des leitfähigen Substrats (20) übertragen wird oder zu einer freistehenden Elektrodenschicht verpresst wird.

17. Verfahren nach einem der Ansprüche 1 bis 16, wobei zumindest eine fünfte Walze (16) und/oder mindestens eine sechste Walze (17) vorgesehen und dazu eingerichtet ist, auf ein auf mindestens einer Seite des leitfähigen Substrats (20) aufgebrachtes Gemisch (21) mindestens ein weiteres Gemisch (23) aufzubringen, wobei durch das Aufbringen des mindestens einen weiteren Gemischs (23) das zuvor aufgebrachte Gemisch (21, 22) vollständig oder bereichsweise bedeckt wird.

18. Verfahren nach einem der Ansprüche 1 bis 16, wobei zumindest eine fünfte Walze (16) und/oder sechste Walze (17) vorgesehen und dazu eingerichtet ist, auf ein auf mindestens einer davor liegenden Walze (11, 14) aufgebrachtes Gemisch (21) mindestens ein weiteres Gemisch (23) aufzubringen, wobei durch das Aufbringen des mindestens einen weiteren Gemischs (23) das zuvor aufgebrachte Gemisch (21, 22) auf der Walze (16, 17) vollständig oder bereichsweise bedeckt wird.

19. Verfahren zum Herstellen einer Elektrode, wobei ein als ein Stromsammler ausgestaltetes leitfähiges Substrat (20) bereitgestellt und zwischen zwei Walzen (11, 12) geführt wird, wobei der zwischen den Walzen (11, 12) geführte Stromsammler einseitig oder beidseitig mit mindestens einem als ein Silizium-Kohlenstoff Materialkomposit ausgestalteten Gemisch (20) durch ein Verfahren nach einem der vorhergehenden Ansprüche beschichtet und in mindestens einem Schritt konfektioniert wird.
